# EUROPÄISCHE PATENTSCHRIFT

(11) **EP 2 032 947 B1**
(45) Veröffentlichungstag und Bekanntmachung des Hinweises auf die Patenterteilung: **05.09.2018**
(21) Anmeldenummer: 07765274.1
(22) Anmeldetag: 22.05.2007
(51) Int. Cl.: G01D 3/02, G01D 3/036

(54) **SENSOR UND VERFAHREN ZUR DATENGEWINNUNG**
SENSOR AND METHOD FOR DATA ACQUISITION
CAPTEUR ET PROCÉDÉ POUR L'ACQUISITION DE DONNÉES

(30) Priorität: 09.06.2006 DE 102006026879
(43) Veröffentlichungstag der Anmeldung: 11.03.2009
(73) Patentinhaber: Robert Bosch GmbH, 70442 Stuttgart (DE)
(72) Erfinder: OHL, Christian, 72793 Pfullingen (DE); ADAM, Boris, 71126 Gaeufelden (DE)
(86) Internationale Anmeldenummer: PCT/EP2007/054911
(87) Internationale Veröffentlichungsnummer: WO 2007/141132

(56) Entgegenhaltungen:
- WO-A-98/20615
- US-A- 4 190 804
- US-A- 5 337 367
- US-A- 5 479 096
- US-A1- 2005 204 820

## Beschreibung

### Stand der Technik

In Kraftfahrzeugen werden zur Erfassung verschiedener Parameter Sensoren eingesetzt, die Daten an eine Auswerteeinheit übermitteln. Die eingesetzten Sensoren umfassen dazu mindestens eine sensitive Baugruppe, die mindestens einen physikalischen und/oder chemischen Parameter, der von einem für den Betrieb des Fahrzeuges relevanten Zustand abhängt, in eine vorzugsweise elektrische Größe umwandelt. Weiterhin umfassen die Sensoren in der Regel eine Schaltung, die einer ersten Aufbereitung der so gewonnenen Größe dient und ein vorzugsweise digitales Sensorausgangssignal an einer Datenübertragungseinheit bereitstellt.

Von der Datenübertragungseinheit erfolgt eine Übertragung des Sensorausgangssignals zu einer Auswerteeinheit, beispielsweise zu einem Steuergerät. Diese Auswerteeinheit verfügt über zumindest eine Datenempfangseinheit, die über geeignete Übertragungsmittel mit der Datenübertragungseinheit des Sensors in Verbindung steht.

In den sensorintern gewonnenen elektrischen Größen der meisten Sensoren ist eine Informationsmenge enthalten, welche den Informationsbedarf für die Absicherung bestimmter Applikationen deutlich übersteigt. Gleichzeitig stellt die Übertragungsstrecke zwischen Sensoren und Steuergeräten, beispielsweise in Form einer Zweidraht-Stromschnittstelle (PSI peripheral sensor interface) mit einer Übertragungskapazität von 125 kBit/s, einen Engpass im Informationsfluss dar.

Aus diesem Grunde wird in der Regel nur eine Teilmenge der maximal verfügbaren Informationen vom Sensor zum Steuergerät geleitet. Es ist jedoch dafür Sorge zu tragen, dass möglichst viele Informationen, die für die jeweilige Funktion, die von dem Steuergerät oder angeschlossenen Systemen realisiert werden soll, relevant sind, tatsächlich zur Datenempfangseinheit des Steuergerätes gelangen. Das gilt in besonderem Maße, wenn ein Sensor mehrere sensitive Baugruppen enthält oder gar als so genannter Kombi-Sensor mit sensitiven Baugruppen zur Erfassung unterschiedlicher physikalischer und/oder chemischer Parameter ausgelegt ist.

Es ist daher bekannt, Sensoren mit einer Auswerteschaltung auszustatten, die im Wesentlichen der Bereitstellung einer nach festen Vorgaben aufbereiteten Datenmenge an der Datenübertragungseinheit dient. Die elektrische Ausgangsgröße der sensitiven Baugruppe wird zu diesem Zweck an unterschiedliche Schaltungskomponenten angelegt, die beispielsweise als Verstärker, Filter oder anderweitige Wandler, die bereits eine digitale Datenverarbeitung vollziehen können, wirken. Diese Schaltungskomponenten bilden einen Signalpfad zwischen der sensitiven Baugruppe des Sensors und der Datenübertragungseinheit. Wird dieser Signalpfad von einem Signal durchlaufen, werden aus der Ausgangsgröße der sensitiven Baugruppe in fest vorgegebener Weise Bestandteile für ein an der Datenübertragungseinheit anliegendes Datenwort extrahiert, das zur weiteren sensorexternen Verarbeitung abgerufen werden kann.

Es ist außerdem bekannt, einen Sensor mit mehreren derartigen Signalpfaden auszustatten, die in Abhängigkeit von der jeweiligen Funktion, die durch das Steuergerät realisiert werden soll, angewählt werden und sich bezüglich der Art und Weise der Gewinnung des an der Datenübertragungseinheit anliegenden Datenwortes unterscheiden. Diese Vorgehensweise stellt eine Auswahl zwischen im Vorfeld reglementierten Verfahren zur Datenreduktion dar.

Im Fall von Kombi-Sensoren ist es außerdem bekannt, die Kommunikation des Sensors mit einem Steuergerät oder anderen Systemkomponenten über mehrkanalfähige Schnittstellen oder mehrere separate Schnittstellen abzuwickeln. Dabei werden jedoch zur Gewährleistung einer hohen Erfassungssicherheit zu überwachender Zustände relativ große Datenmengen übermittelt.

In den Schriften WO 98/20615 A, US 2005/204820 A1,

US-A-5337367 und US-A-5479096 sind beispielhaft Sensorsysteme aus dem Stand der Technik offenbart.

### Offenbarung der Erfindung

Die Erfindung besteht in einem Sensor zur Datengewinnung, umfassend mehrere sensitive Baugruppen zur quantitativen Erfassung eines zu bestimmenden Parameters, mindestens eine Datenübertragungseinheit für eine Übermittlung gewonnener Daten und mindestens einen Signalpfad zwischen den sensitiven Baugruppe und der Datenübertragungseinheit, wobei weiterhin eine Steuerlogik enthalten ist, die in Abhängigkeit von mindestens einer Ausgangsgröße der sensitiven Baugruppen mindestens einen Übertragungsparameter des Signalpfades und/oder der Datenübertragungseinheit festlegt.

Die Erfindung besteht des Weiteren in einem Verfahren zur Bereitstellung eines Ausgangssignals eines Sensors, der mehrere sensitive Baugruppe zur quantitativen Erfassung eines zu bestimmenden Parameters, mindestens eine Datenübertragungseinheit für eine Übermittlung gewonnener Daten und mindestens einen Signalpfad zwischen der sensitiven Baugruppen und der Datenübertragungseinheit umfasst, in dem eine Ausgangsgröße der sensitiven Baugruppen einer Steuerlogik zugeführt wird, die Steuerlogik in Abhängigkeit von dieser Ausgangsgröße der sensitiven Baugruppe und/oder in Abhängigkeit von einer aus dieser Ausgangsgröße abgeleiteten Größe mindestens einen Übertragungsparameter des Signalpfades und/oder der Datenübertragungseinheit festlegt, mindestens eine Ausgangsgröße der sensitiven Baugruppen über den Signalpfad an die Datenübertragungseinheit übermittelt und mindestens ein Ausgangsdatenwort, das Informationen über die Ausgangsgröße der sensitiven Baugruppe enthält, an der Datenübertragungseinheit zur weiteren Übermittlung bereitgestellt wird.

Die Steuerlogik ist dabei so ausgelegt, dass die Ableitung von Größen aus der Ausgangsgröße der sensitiven Baugruppe in der Steuerlogik selbst und/oder in verschiedenen Baugruppen innerhalb des Signalpfades zwischen der sensitiven Baugruppe und der Datenübertragungseinheit und/oder sensorextern erfolgen kann. Zusätzlich oder alternativ können der Steuerlogik weitere Eingangssignale zugeleitet werden, über die auf andere Weise Einfluss auf die erfindungsgemäß festzulegenden Übertragungsparameter genommen werden kann. Beispielsweise sind auf diese Weise eine Programmierung der Steuerlogik und/oder eine Kombination der Steuerlogik mit zusätzlichen externen Steuerkomponenten realisierbar.

Unter Übertragungsparametern des Signalpfades und/oder der Datenübertragungseinheit im Sinne der Erfindung sind im Falle von Sensoren mit mehreren sensitiven Baugruppen auch Auswahlparameter und im Falle von Kombi-Sensoren auch die Art des erfassten physikalischen und/oder chemischen Parameters zu verstehen, wodurch gesteuert werden kann, welche sensitiven Baugruppen direkt oder indirekt Informationen liefern, die in ein zu übermittelndes Ausgangsdatenwort integriert werden.

### Vorteilhafte Wirkungen

Die Festlegung der Übertragungsparameter erfolgt dabei so, dass Ausgangsgrößen der sensitiven Baugruppe bezüglich ihrer Relevanz für entsprechende Applikationen bewertet und die Bereitstellung benötigter Daten am Ausgang der Datenübertragungseinheit so angepasst wird, dass die für eine weitere Übertragung der Daten zu einer zentralen Auswerteeinheit, typischerweise einem Steuergerät, zur Verfügung stehende Bandbreite optimal für eine Übertragung applikationsrelevanter Informationen genutzt werden kann. Dabei können vorselektierte Signalanteile oder abgeleitet Größen übertragen werden. Vorteilhafterweise können durch die erfindungsgemäße Bewertung der Sensordaten oder daraus abgeleiteter Informationen über Rückkopplungen die festgelegten Übertragungsparameter während des Betriebes angepasst und optimiert werden.

Neben der optimalen Ausnutzung einer vorgegebenen Bandbreite können Ausgangssignale eines erfindungsgemäßen Sensors für unterschiedliche Applikationen in unterschiedlicher Form zur Verfügung gestellt werden. Dadurch kann die Zahl der benötigten Sensoren reduziert werden. Zeitdiskrete Ausgangssignale und in digitaler Form vorliegende Statusinformationen können gemischt und dem jeweiligen Bedarfsfall angepasst übertragen werden.

Die Erfindung ist sowohl für den Betrieb einzelner Sensoren als auch mehrerer Sensoren und die Übertragung der Sensorausgangssignale über einen gemeinsam genutzten Übertragungskanal geeignet. Die Erfindung ist ebenso für den Betrieb von Sensoren geeignet, die mehrere sensitive Baugruppen enthalten. Dabei kann es sich um gleichartige sensitive Baugruppen, beispielsweise in mehrachsigen Beschleunigungssensoren, oder um verschiedenartige sensitive Baugruppen, beispielsweise in Kombi-Sensoren zur gleichzeitigen Messung von Drücken und Beschleunigungen, handeln.

Besonders geeignet ist das erfindungsgemäße Sensorkonzept für eine Verwendung in Verbindung mit Druck- und/oder Beschleunigungsmessungen, beispielsweise durch mikromechanische Druck-, Beschleunigungs- oder Kombi-Sensoren für Airbagsysteme.

In den genannten Fällen ist es erfindungsgemäß, wenn die Steuerlogik und/oder die Datenübertragungseinheit über Mittel verfügen, um aus Ausgangsgrößen mehrerer sensitiver Baugruppen gewonnene Daten gemeinsam in einem Ausgangsdatenwort bereitzustellen. Erfindungsgemäß ist es, wenn Mittel umfasst sind, die es ermöglichen, die Wortbreite, die in einem Ausgangsdatenwort für die Bereitstellung der aus den Ausgangsgrößen der einzelnen sensitiven Baugruppen gewonnenen Daten zur Verfügung steht, einzustellen. Beispielsweise können dann Ausgangsgrößen einer sensitiven Baugruppe zur Messung von Beschleunigungen und Ausgangsgrößen einer sensitiven Baugruppe zur Messung von Drücken gemeinsam in ein Ausgangsdatenwort einbezogen werden, wobei die jeweils für die einzelnen Ausgangsgrößen zur Verfügung stehende Wortbreite variiert bzw. unterschiedlich eingestellt werden kann, ohne die Gesamtwortbreite des Ausgangsdatenwortes verändern zu müssen.

Vorzugsweise an Ausführungsbeispielen aus dem Bereich Kfz-Insassenschutz/Airbag-Steuerung wird die Erfindung im Folgenden näher erläutert, ohne sich auf diese Systeme beschränken zu wollen.

### Kurze Beschreibung der Zeichnungen

Die zugehörigen Figuren zeigen:
- Fig. 1: ein Blockschema der Grundkomponenten eines erfindungsgemäßen Sensors;
- Fig. 2: ein Blockschema eines erfindungsgemäßen Sensors mit mehreren sensitiven Baugruppen;
- Fig. 3: ein Blockschema eines erfindungsgemäßen Kombi-Sensors mit mehreren sensitiven Baugruppen;
- Fig. 4: ein Übertragungsschema eines Ausgangsdatenwortes nach Abfrage einer sensitiven Baugruppe;
- Fig. 5: ein Übertragungsschema eines Ausgangsdatenwortes nach Abfrage zweier sensitiver Baugruppen;
- Fig. 6: ein alternatives Übertragungsschema eines Ausgangsdatenwortes nach Abfrage zweier sensitiver Baugruppen; und
- Fig. 7: ein Übertragungsschema aufeinander folgender Ausgangsdatenworte nach Abfrage zweier sensitiver Baugruppen.

### Ausführungsformen der Erfindung

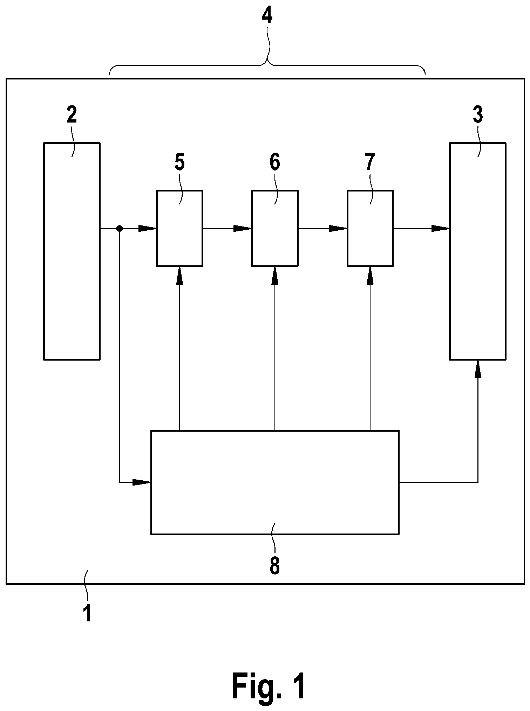

Figur 1 zeigt ein Blockschema der Grundkomponenten eines erfindungsgemäßen Sensors. Der Sensor 1 umfasst eine sensitive Baugruppe 2 zur quantitativen Erfassung eines zu bestimmenden Parameters, eine Datenübertragungseinheit 3 für eine Übermittlung gewonnener Daten und einen Signalpfad 4 zwischen der sensitiven Baugruppe 2 und der Datenübertragungseinheit 3. Der Signalpfad 4 enthält einen Verstärker 5, eine Filterschaltung 6 und eine Schaltung zur digitalen Signalverarbeitung 7. Erfindungsgemäß ist weiterhin eine Steuerlogik 8 enthalten, der eine Ausgangsgröße der sensitiven Baugruppe 2 zugeleitet wird, die diese Ausgangsgröße auswertet und die in Abhängigkeit davon den Verstärkungsfaktor, die Filtercharakteristik und gegebenenfalls die Art der digitalen Signalverarbeitung als Übertragungsparameter des Signalpfades 4 und die Art und Weise der Bereitstellung eines Ausgangsdatenwortes an der Datenübertragungseinheit, also beispielsweise die Wortbreite und zeitliche Zyklen, als Übertragungsparameter der Datenübertragungseinheit 3 festlegt. An der Datenübertragungseinheit 3 liegt somit ein bereits in Abhängigkeit von Eingangsgrößen aufbereitetes bzw. vorverarbeitetes Ausgangssignal an, das zur weiteren Verarbeitung an ein Steuergerät übermittelt werden kann.

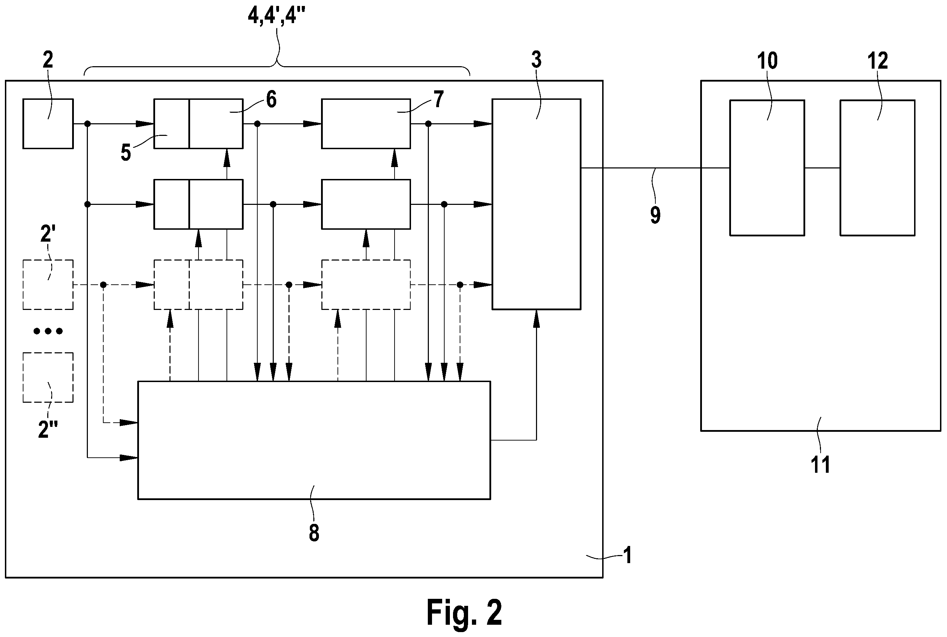

Figur 2 zeigt ein Blockschema eines erfindungsgemäßen Sensors 1 mit mehreren sensitiven Baugruppen 2, 2', 2". Die einzelnen sensitiven Baugruppen sind jeweils über mindestens einen Signalpfad 4, 4', 4" ..., der entsprechend dem Beispiel in Fig. 1 ausgestaltet ist, mit einer gemeinsamen Datenübertragungseinheit 3 verbunden. Eine gemeinsame Steuerlogik 8 steuert Verstärkungsfaktoren, Filtercharakteristika, die Art der digitalen Signalverarbeitung der einzelnen Signalpfade 4, 4', 4" und die Art und Weise der Bereitstellung der Ausgangsdatenworte an der Datenübertragungseinheit 3. Dazu werden der Steuerlogik 8 Ausgangsgrößen der sensitiven Baugruppen 2, 2' 2" direkt oder nach verschiedenen Stufen einer Vorverarbeitung innerhalb der Signalpfade 4, 4', 4" zugeführt. In der Steuerlogik 8 selbst erfolgt ebenfalls eine Signalverarbeitung, als deren Ergebnis Kriterien für die Steuerung der Übertragungsparameter abgeleitet werden und die zusätzlich direkt an die Datenübertragungseinheit 3 geleitet werden können. Die Datenübertragungseinheit 3 steht über eine Datenleitung 9 fester Übertragungskapazität mit einer Datenempfangseinheit 10 eines Steuergerätes 11 in Verbindung, in welchem eine Einheit 12 zur Signalverarbeitung die abschließende Aufbereitung der gewonnenen Daten vornimmt und angeschlossene Systeme steuert. Im vorliegenden Beispiel ist die sensitive Baugruppe 2 über zwei parallele Signalpfade 4, 4' mit der Datenübertragungseinheit 3 verbunden. Dadurch kann eine Festlegung der Übertragungsparameter durch einfaches Umschalten zwischen unterschiedlichen Signalpfaden mit unterschiedlichen voreingestellten Übertragungsparametern erfolgen. Bei Verwendung einer Zweidraht-Stromschnittstelle (PSI) kann die Bereitstellung des Ausgangsdatenwortes auch so erfolgen, dass bei einer festen Übertragungsrate und einer festen Wortbreite der Dateninhalt einzelner Datenworte variabel unterteilt wird. Bei 20 Bit Wortbreite können beispielsweise 4 Bit für Header-Informationen, 4 Bit für die Übertragung eines Signals mit niedriger Auflösung und 12 Bit für die Übertragung eines Signals mit hoher Auflösung verwendet werden. Wird durch die Steuerlogik ein Zustand erkannt, der eine andere Aufteilung erfordert, so wird sie automatisch geändert. Alternativ sind Übertragungsformate mit unterschiedlichen Datenwortbreiten oder eine variable Zusammenfassung aufeinanderfolgender Datenworte zu unterschiedlich großen Blöcken möglich.

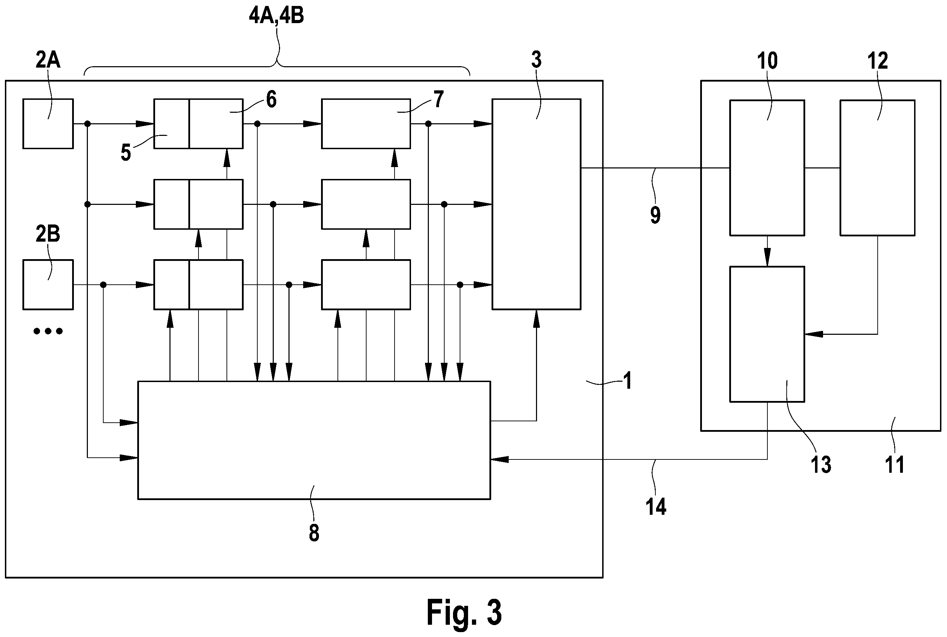

Figur 3 zeigt ein Blockschema eines erfindungsgemäßen Kombi-Sensors mit mehreren sensitiven Baugruppen. Die einzelnen sensitiven Baugruppen, vorliegend eine sensitive Baugruppe zur Druckmessung 2A und mindestens eine sensitive Baugruppe zur Beschleunigungsmessung 2B, sind wiederum jeweils über mindestens einen Signalpfad 4A, 4B mit einer gemeinsamen Datenübertragungseinheit 3 verbunden. Analog zu vorangegangenen Beispielen steuert eine gemeinsame Steuerlogik 8 Verstärkungsfaktoren, Filtercharakteristika, die Art der digitalen Signalverarbeitung der einzelnen Signalpfade 4A, 4B und die Art und Weise der Bereitstellung der Ausgangsdatenworte an der Datenübertragungseinheit 3. Die Datenübertragungseinheit 3 steht über eine Datenleitung 9 fester Übertragungskapazität mit einer Datenempfangseinheit 10 eines Steuergerätes 11 in Verbindung, in welchem eine Einheit 12 zur Signalverarbeitung die abschließende Aufbereitung der gewonnenen Daten vornimmt und angeschlossene Systeme steuert. Innerhalb des Steuergerätes 11 befindet sich eine weitere Signalverarbeitungseinheit 13, welche durch Verarbeitung der empfangenen Signale Steuersignale generieren kann, welche der Steuerlogik 8 über eine Datenleitung 14 zugeführt werden können. Dieses Steuersignal dient für die Steuerlogik 8 als weiteres Eingangssignal und kann somit die Übertragungscharakteristika der einzelnen Signalpfade 4A, 4B beeinflussen. Des weiteren können so generierte Steuersignale für eine Umprogrammierung der Steuerlogik während des Betriebes herangezogen werden. In der Steuerlogik 8 erfolgt ebenfalls eine Signalverarbeitung als deren Ergebnis Kriterien für die Steuerung der Übertragungsparameter abgeleitet werden und die zusätzlich direkt an die Datenübertragungseinheit 3 geleitet werden können. Durch die Zuführung eines Steuersignals vom Steuergerät erweitert sich somit die Funktionalität der Steuerlogik 8, was insbesondere bei der Aufarbeitung komplexer Datenmengen, wie sie insbesondere in Kombi-Sensoren anfallen, von Vorteil ist. Bei Kombi-Sensoren wie im vorliegenden Beispiel, kann durch einfaches Umschalten zwischen unterschiedlichen Signalpfaden mit gleichen oder unterschiedlichen voreingestellten Übertragungsparametern die Art des physikalischen und/oder chemischen Parameters ausgewählt werden, welche elektrisch gewandelt in Form des Ausgangsdatenwortes bereit gestellt werden soll. Die Bereitstellung des Ausgangsdatenwortes kann auch so erfolgen, dass bei einer festen Übertragungsrate und einer festen Wortbreite der Dateninhalt einzelner Datenworte variabel unterteilt wird, wobei Informationen, die durch unterschiedliche sensitive Baugruppen gewonnen wurden, in ein Ausgangsdatenwort einfließen können, auch wenn diese sensitiven Baugruppen der Erfassung unterschiedlicher physikalischer und/oder chemischer Parameter dienen. Auch in diesem Falle gilt, dass in Fällen, in denen durch die Steuerlogik ein Zustand erkannt wird der eine andere Aufteilung des Ausgangsdatenwortes erfordert, diese automatisch geändert wird.

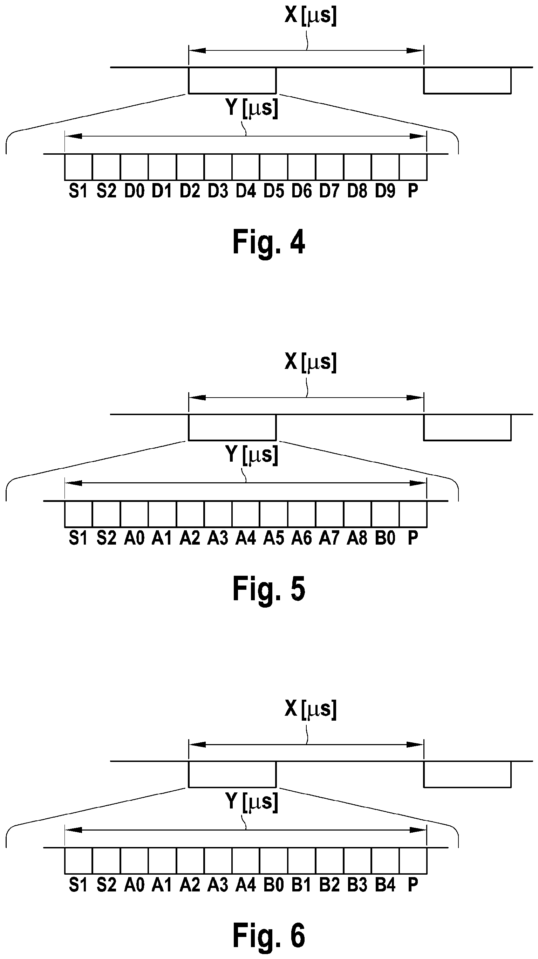

Figur 4 zeigt ein Übertragungsschema eines beispielhaften Ausgangsdatenwortes nach Abfrage einer sensitiven Baugruppe. Die Datenübertragung von der Datenübertragungseinheit zum Steuergerät erfolgt seriell in Blöcken, deren Übertragung innerhalb eines Übertragungszyklus X eine Übertragungszeit Y in Anspruch nimmt. Die Codierung kann dabei nach einem Manchester-Code vorgenommen werden. Die Übertragung beginnt jeweils mit der Übertragung von zwei Synchronisierungs-Bits S1, S2 und wird durch die Übertragung eines Paritäts-Bits P abgeschlossen, anhand dessen die Korrektheit des übertragenen Datenwortes verifiziert werden kann. Das übertragene Datenwort enthält des weiteren die eigentliche zu übertragende Information bezüglich des von einer sensitiven Baugruppe erfassten Parameters, die innerhalb des Ausgangsdatenwortes in Form einer zehnstelligen Bit-Folge D0 bis D9 bereitgestellt wird. Auf diese Weise steht eine Auflösung von 10 Bit zur Verfügung, um von einer sensitiven Baugruppe erfasste Parameter in gewandelter Form an ein Steuergerät zu übertragen.

Figur 5 zeigt ein Übertragungsschema eines Ausgangsdatenwortes nach Abfrage zweier sensitiver Baugruppen. Im Ergebnis der quantitativen Erfassung zweier zu bestimmender Parameter durch zwei unterschiedliche sensitive Baugruppen werden in Abhängigkeit von den Eingangsgrößen nach Passage der entsprechenden Signalpfade vorverarbeitete Bit-Folgen in das Ausgangsdatenwort integriert, das zur weiteren Verarbeitung an ein Steuergerät übermittelt werden kann. Auf diese Weise ist es möglich, Informationen, die durch Erfassung von Parametern durch mehrere sensitive Baugruppen gewonnen wurden, ohne Zeitversatz in einem einzigen Ausgangsdatenwort zu übertragen. In Abhängigkeit von Vorgaben der Steuerlogik kann die für diese Übertragung erforderliche Bandbreite in unterschiedlicher Weise aufgeteilt werden. Im vorliegenden Beispiel wurde der zur Verfügung stehende Bereich für die Übertragung von 10 Bit asymmetrisch im Verhältnis 9 zu 1 geteilt. Dadurch ist es möglich, in einem Ausgangsdatenwort eine quantitative Information zu einem physikalischen oder chemischen Parameter mit einer Auflösung von 9 Bit zu übertragen und gleichzeitig eine quantitative Information zu einem weiteren physikalischen oder chemischen Parameter, der von einer anderen sensitiven Baugruppe des erfindungsgemäßen Sensors erfasst wurde, zu übertragen, wobei die Auflösung in diesem Falle 1 Bit beträgt. Auflösungen von 1 Bit sind beispielsweise für die Übertragung von Schwellwertinformationen geeignet, wie sie für verschiedene Plausibilisierungsalgorithmen von Vorteil sein können.

Figur 6 zeigt ein alternatives Übertragungsschema eines Ausgangsdatenwortes nach Abfrage zweier sensitiver Baugruppen. Im Unterschied zum Beispiel in Fig. 5 erfolgt die Aufteilung der für die Informationsübertragung zur Verfügung stehenden Wortbreite im Ausgangsdatenwort symmetrisch im Verhältnis 1 zu 1. Es stehen also jeweils fünf Bit für zwei quantitative Informationen, die durch die Erfassung zweier Parameter durch zwei sensitive Baugruppen des erfindungsgemäßen Sensors bereitgestellt werden, zur Verfügung. Auf diese Weise lassen sich mehrere sensitive Baugruppen mit gleicher, wenn auch relativ geringer Auflösung, gleichzeitig abfragen. Dadurch wird die Übertragung relativ geringer Datenvolumina erforderlich, solange keine höheren Auflösungen notwendig sind.

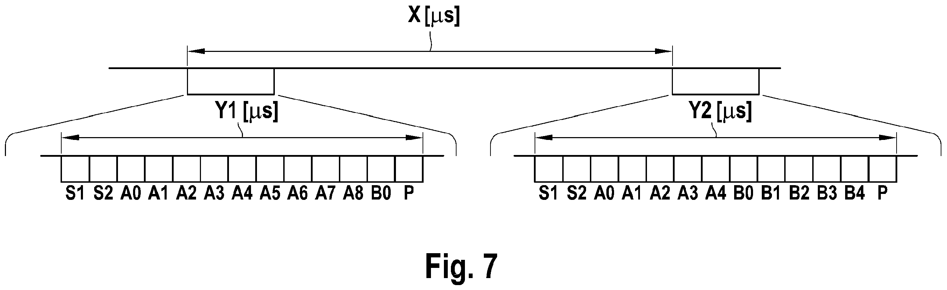

Figur 7 zeigt ein Übertragungsschema aufeinander folgender Ausgangsdatenworte nach Abfrage zweier sensitiver Baugruppen. Innerhalb des Übertragungszyklus X wird jeweils ein Ausgangsdatenwort übertragen, was eine Übertragungszeit Y in Anspruch nimmt. Zwischen der Übertragung aufeinanderfolgender Ausgangsdatenworte können von der Steuerlogik und/oder dem Steuergerät Übertragungsparameter der Signalpfade zwischen den einzelnen sensitiven Baugruppen und der Datenübertragungseinheit dergestalt geändert werden, dass in das Ausgangsdatenwort zu integrierende Signalteile mit unterschiedlicher Auflösung in das Datenwort integriert werden. Ein erstes Datenwort wird im Zeitfenster Y1 übertragen. Dieses enthält quantitative Informationen über von zwei unterschiedlichen sensitiven Baugruppen erfasste Parameter, wobei die einen ersten Parameter betreffende Information mit einer Auflösung von 9 Bit übertragen wird, während die einen zweiten Parameter betreffende Information in Form einer Plausibilisierung mit einer Auflösung von 1 Bit übertragen wird. Werden im Zuge der weiteren Signalverarbeitung Umstände erkannt, die es zweckmäßig erscheinen lassen, Informationen über den von der zweiten sensitiven Baugruppe erfassten Parameter mit einer höheren Auflösung zur Verfügung zu stellen, so wird vor Übertragung des nächstfolgenden Ausgangsdatenwortes die Aufteilung der für die Übertragung zur Verfügung stehenden Bandbreite dergestalt geändert, dass sich beispielsweise eine symmetrische Aufteilung ergibt, was dazu führt, dass für die Übertragung der von den beiden sensitiven Baugruppen erfassten Parametern betreffende Informationen jeweils 5 Bit zur Verfügung stehen. In gleicher Weise sind andere Aufteilungsmuster denkbar, beispielsweise kann die Bereitstellung eines Plausibilisierungs-Bits auch durch die Signalvorverarbeitung der zur Datenübertragungseinheit geleiteten Signale einer anderen sensitiven Baugruppe vorgenommen werden. Auf diese Weise können physikalische Vorgänge, die durch zeitliche Änderung von physikalischen Parametern gekennzeichnet sind mit hoher Genauigkeit erfasst werden, wobei der Parameter, dessen aktuelle zeitliche Änderung zu einem bestimmten Zeitpunkt jeweils die beste Charakterisierung des zu überwachenden physikalischen Prozesses erlaubt, mit maximaler Auflösung in das Ausgangsdatenwort der Datenübertragungseinheit abgebildet werden kann, wobei die Auflösung bei Verschiebung der Signifikanz zu anderen Parametern automatisch an die jeweiligen Anforderungen angepasst werden kann.

Im Folgenden wird die Erfindung an Einsatzbeispielen näher erläutert, in denen die Sensoren als Beschleunigungssensoren, gegebenenfalls in Kombination mit Drucksensoren in Airbagsystemen ausgelegt sind.

Als Bestandteil von ESP-Systemen wird mindestens ein Beschleunigungssensor (y-Achsen-Beschleunigungssensor) eingesetzt. Für einen fehlerfreien Betrieb ist eine Auswertung relativ niedriger Beschleunigungen erforderlich, die jedoch mit hoher Auflösung erfolgen muss. Eine zum Sensor gehörende Steuerlogik sorgt dafür, dass im Standardbetrieb unter entsprechender Signalverstärkung eine zyklische Bereitstellung des von der sensitiven Baugruppe ermittelten Beschleunigungswertes in Form eines Datenwortes an der Datenübertragungseinheit erfolgt, wobei die Breite des Datenwortes auf einen hohen Wert eingestellt wird. Gleichzeitig wird innerhalb der Steuerlogik der von der sensitiven Baugruppe ermittelte Beschleunigungswert überwacht, beispielsweise durch einen Schwellwertvergleich oder fortwährende Überwachung eines integralen Wertes der ermittelten Beschleunigungen über ein mitlaufendes Zeitfenster. Wird bei einer derartigen Überwachung ein Wert detektiert, der mit einem Seitencrash in Verbindung gebracht werden kann, veranlasst die Steuerlogik, dass die Bereitstellung des von der sensitiven Baugruppe ermittelten Beschleunigungswertes in Form eines Datenwortes an der Datenübertragungseinheit mit geringerer Verstärkung, geringerer Wortbreite, jedoch höherer Frequenz erfolgt. Dadurch können höherfrequente Signalanteile erfasst, an das Steuergerät übermittelt und die für den Beschleunigungsverlauf während eines Crashs typischen Muster erkannt und für die Steuerung eines Airbagsystems verwendet werden.

Im folgenden Ausführungsbeispiel wird die erfindungsgemäße Auswertung der Signale eines xyz-Beschleunigungssensors beschrieben. In Richtung der z-Achse eines Fahrzeuges erfasst ein derartiger Sensor niedrige Beschleunigungswerte, die für eine Fahrdynamikregelung, also die Anpassung der Federung, herangezogen werden können. Die Überwachung der Beschleunigungswerte in xy-Richtung dient der Crasherkennung. Im unfallfreien Normalbetrieb wird ein Großteil der für die Datenübertragung zwischen der Datenübertragungseinheit des Sensors und der Datenübertragungseinheit eines Steuergerätes zur Verfügung stehenden Bandbreite für die Übermittlung der Beschleunigungswerte in z-Richtung beansprucht. Das heißt, die Steuerlogik veranlasst, dass eine zyklische Bereitstellung des von der sensitiven Baugruppe ermittelten Beschleunigungswertes in z-Richtung in Form eines Datenwortes in einer von der Steuerlogik bestimmten Auflösung an der Datenübertragungseinheit derart erfolgt, dass die Übermittlung dieser Datenworte bereits nahezu die gesamte Bandbreite erfordert. Innerhalb der Steuerlogik werden die in xy-Richtung von der sensitiven Baugruppe erfassten Beschleunigungswerte überwacht und zu einer Statusinformation verarbeitet. Diese Statusinformation beschreibt die ermittelte Beschleunigung in Relation zu einem Schwellwert, beispielsweise 3g. Die Statusinformation benötigt zu ihrer Übermittlung nur eine sehr geringe Bandbreite, falls diese Information zum Steuergerät übertragen werden soll. Wird durch ein Überschreiten des Schwellwertes eine Crashsituation detektiert, so veranlasst die Steuerlogik, dass die Übertragung des z-Signals unterdrückt und die gesamte Bandbreite für eine Übertragung von Informationen genutzt wird, die aus in xy-Richtung ermittelten Beschleunigungswerten folgen oder abgeleitet werden können.

Im nächsten Ausführungsbeispiel wird gezeigt, wie durch unterschiedliche Ressourcenbereitstellung für die Übertragung der Sensorsignale die Auslöseperformance eines Airbagsystems verbessert werden kann.

Ein Beschleunigungssensor verfügt über eine Steuerlogik, die eine Auswertung der einzelnen Frequenzanteile des ermittelten Beschleunigungssignals vornehmen kann. Die Steuerlogik ist dabei so ausgelegt, dass sie eine aus höherfrequenten Signalanteilen abgeleitete Information mit hoher Auflösung und ein Fensterintegral über niederfrequente Signalanteile als Statusinformation mit geringer Auflösung an der Datenübertragungseinheit bereitstellt. Da zu Beginn eines schweren Crashs u. a. durch Körperschall induzierte höherfrequente Signale auftreten, kann der Kontaktzeitpunkt relativ genau bestimmt werden. Gleichzeitig erlaubt die Überwachung des Fensterintegrals über die niederfrequenten Signalanteile eine schnelle Plausibilisierung, da im weiteren Crashverlauf je nach Einbauort des Sensors aufgrund der Verzögerung des gesamten Fahrzeuges zusätzlich vermehrt niederfrequente Signalanteile auftreten. Wird über die Überwachung des Fensterintegrals über die niederfrequenten Signalanteile ein Crash diagnostiziert, so veranlasst die Steuerlogik, dass eine höhere Bandbreite für die Übertragung des Wertes des Fensterintegrals genutzt wird, wodurch das Steuergerät in der Lage ist, den Auslösezeitpunkt des Airbags optimal zu bestimmen. Dafür ist eine Übertragung der höherfrequenten Signalanteile vorübergehend nicht erforderlich und wird daher unterdrückt oder mit reduzierter Bandbreite veranlasst. Auf diese Weise lässt sich eine bessere Unterscheidung zwischen Crashsituationen und anderweitigen Störbeschleunigungen realisieren, wodurch teilweise gefährliche Fehlauslösungen von Airbagsystemen vermieden werden können.

Im folgenden Ausführungsbeispiel wird eine weitere Form einer erfindungsgemäßen Anbindung von Beschleunigungssensoren an ein Steuergerät beschrieben. Beschleunigungssensoren werden nach dem im vorigen Beispiel beschriebenen Prinzip zur Seitencrasherkennung eingesetzt. Dabei dient ein Beschleunigungssensor auf der Crashseite der Ermittlung des Kontaktzeitpunktes und ein zweiter Sensor auf der gegenüberliegenden Fahrzeugseite als "ausgelagerter Sensor" der Plausibilisierung des Seitencrashs. Im unfallfreien Normalzustand wird von beiden Sensoren nur die Statusinformation an das Steuergerät übermittelt, die ein Fehlen crashrelevanter Beschleunigungen signalisiert. Neben einem geringen Bandbreitebedarf ergibt sich in diesem Zustand eine geringe Beanspruchung der Rechenkapazität des Steuergerätes. Dadurch steht das Steuergerät für andere Anwendungen zur Verfügung, was von Bedeutung ist, wenn das Steuergerät für mehrere Funktionen, wie beispielsweise in CAPS-Systemen (Combination Active & Passive Safety), vorgesehen ist.

Beim Auftreten niederfrequenter Signale niedriger Amplitude wird in einen Modus zur Plausibilisierung umgeschaltet, in dem die niederfrequenten Signalanteile und/oder ein daraus abgeleiteter Wert, beispielsweise ein Fensterintegral, mit hoher Auflösung übertragen werden. Werden dagegen höherfrequente Signale mit hoher Amplitude festgestellt, werden diese, wie bereits beschrieben, übertragen und ein anderer Sensor, vorzugsweise auf der anderen Fahrzeugseite, übernimmt die Plausibilisierung.

Im folgenden Ausführungsbeispiel wird die erfindungsgemäße Auswertung und Übertragung der Signale eines Kombi-Sensors zur Messung von Druck und Beschleunigung beschrieben. Derartige Sensoren können beispielsweise in Kraftfahrzeugen zur Detektion von Seitencrashs verwendet werden. Zu diesem Zwecke werden sie beispielsweise in weitgehend geschlossene Hohlräume, beispielsweise im Bereich der Seitentüren von Kraftfahrzeugen, eingebaut. Sie umfassen mikromechanische sensitive Baugruppen zur ein- oder mehrachsigen Erfassung von Beschleunigungen und dem Umgebungsdruck. Im Falle eines Seitencrashs in der Nähe des Einbauortes des Kombisensors wird es anfangs durch die Deformation der Karosserie im Kontaktbereich zu einer Verringerung des Volumens des den Kombisensor aufnehmenden Hohlraums und damit verbunden zu einem Druckanstieg kommen. Funktionsbedingt erlaubt der Beginn des Druckanstieges die zeitliche Bestimmung des Beginns der Deformation der Karosserie. Zur Plausibilisierung der gemessenen Druckwerte kann das Überschreiten eines Schwellwertes der Querbeschleunigung benutzt werden, das erfindungsgemäß in Form eines Plausibilisierungs-Bits angezeigt werden kann. Zu diesem Zeitpunkt ist es also zweckmäßig, ein an der Datenübertragungseinheit eines erfindungsgemäßen Kombisensors anliegendes Datenwort dergestalt aufzuteilen, dass lediglich ein Bit für aus der Ausgangsgröße der beschleunigungssensitiven Baugruppe gewonnene Daten genutzt wird, und dass die restliche für die Datenübertragung zur Verfügung stehende Wortbreite für die Übertragung der aus der Ausgangsgröße der drucksensitiven Baugruppe gewonnenen Daten genutzt wird. Es wird also lediglich ein Plausibilisierungs-Bit aus dem Beschleunigungssignal extrahiert und in das Ausgangsdatenwort eingefügt, welches nahezu vollständig für die Übertragung von Druckwerten genutzt wird. Zeitliche Änderungen des Druckes innerhalb des sensorbestückten Hohlraums lassen sich so mit hoher Auflösung erfassen und auswerten. Nach Abschluss der Deformationen im Bereich des sensorbestückten Hohlraums kommt es zu keinem weiteren Druckanstieg bzw. zu einem allmählichen Druckausgleich mit der Fahrzeugumgebung.

In dieser Phase können jedoch weiterhin niedrig- oder hochfrequente Querbeschleunigungen auftreten, deren Auswertung für die Bestimmung des exakten Auslösezeitpunktes eines Airbag-Systems zunehmend relevant wird. In dieser Phase eines Seitencrashs ist es daher zweckmäßig, innerhalb des Ausgangsdatenwortes der Signalübertragungseinheit des Kombisensors eine größere Wortbreite für aus der Ausgangsgröße der beschleunigungssensitiven Baugruppe gewonnene Daten zur Verfügung zu stellen. Zu diesem Zwecke kann das Ausgangsdatenwort symmetrisch aufgeteilt werden bzw. der größte Teil der zur Verfügung stehenden Wortbreite für die Übertragung der Beschleunigungswerte genutzt werden. Die Veränderung der Aufteilung des Ausgangsdatenwortes kann dabei automatisiert durch Auswertung mindestens einer Ausgangsgröße einer sensitiven Baugruppe gesteuert werden. Diese Auswertung kann sensorintern innerhalb der Steuerlogik selbst und/oder extern in einem Steuergerät und/oder unter Nutzung hinterlegter Algorithmen vorgenommen werden. Diese Algorithmen können ereignisgesteuert synchronisiert werden. Beispielsweise ist es vorteilhaft, zu einem bestimmten Zeitpunkt nach Detektion eines Seitencrashs die Zuordnung der zur Verfügung stehenden Wortbreite innerhalb des Ausgangsdatenwortes zu den jeweiligen sensitiven Baugruppen zu ändern. Auf diese Weise lassen sich bei einem Kombisensor zur Messung von Druck und Beschleunigung die Ausgangssignale über eine Schnittstelle übertragen, wobei mit geringem Aufwand ein größtmöglicher Nutzen für das gesamte Sicherheitssystem erzielt wird.

Eine derartige erfindungsgemäße Konfiguration der Datenübertragung ist grundsätzlich flexibel, wobei die Aufteilung der Wortbreite auch andere Teilungsfaktoren umfassen kann. Ebenso ist eine kundenspezifische Auswahl verschiedener Aufteilungsmodi realisierbar, die beispielsweise durch Austausch programmierter EPROMs angepasst werden kann. Es ist auch möglich, die Aufteilung des Ausgangsdatenwortes vom Verlauf der Signalpegel der Ausgangsgrößen der sensitiven Baugruppen abhängig zu machen, was eine dynamische und besonders auf den jeweiligen Einzelfall bezogene Optimierung der Datenübertragung ermöglicht. Die erfindungsgemäße Beeinflussung der Übertragungsparameter kann mit signalunabhängigen festen Algorithmen, beispielsweise einer Triggerung, kombiniert werden. Die teilweise Verlagerung der Signalverarbeitung in den Sensor selbst sorgt für die Möglichkeit schnellerer Systementscheidungen.

Die erfindungsgemäße Datengewinnung kann durch ereignisunabhängige Verfahren zur Sensorabfrage ergänzt werden. Beispielsweise kann nach einen vorgegebenen Zeitregime eine zyklische Abfrage der einzelnen sensitiven Baugruppen eines Kombi-Sensors vorgenommen werden. Erst zum Zeitpunkt eines Crashbeginns oder unmittelbar davor wird dann in den Modus mit einer variablen Aufteilung der zur Verfügung stehenden Wortbreite der zu übermittelnden Ausgangsdatenworte gewechselt, um mit einer begrenzten Übertragungskapazität eine maximale Systemleistung zu sichern.

## Patentansprüche

1. Sensor (1) zur Datengewinnung, umfassend mehrere sensitive Baugruppen (2, 2', 2", 2A, 2B) zur quantitativen Erfassung eines zu bestimmenden Parameters, mindestens eine Datenübertragungseinheit (3) für eine Übermittlung gewonnener Daten und mindestens einen Signalpfad (4) zwischen den sensitiven Baugruppen (2, 2', 2", 2A, 2B) und der Datenübertragungseinheit (3), **dadurch gekennzeichnet, dass** weiterhin eine Steuerlogik (8) enthalten ist, die in Abhängigkeit von mindestens einer Ausgangsgröße der sensitiven Baugruppen (2, 2', 2", 2A, 2B) mindestens einen Übertragungsparameter der Datenübertragungseinheit (3) festlegt, wobei die Steuerlogik (8) und/oder die Datenübertragungseinheit (3) über Mittel verfügen, aus Ausgangsgrößen mehrerer sensitiver Baugruppen (2, 2', 2", 2A, 2B) gewonnene Daten gemeinsam in einem Ausgangsdatenwort bereitzustellen und wobei Mittel umfasst sind, die es ermöglichen, die Wortbreite, die in einem Ausgangsdatenwort für die Bereitstellung der aus den Ausgangsgrößen der einzelnen sensitiven Baugruppen (2, 2', 2", 2A, 2B) gewonnenen Daten zur Verfügung steht, einzustellen.

2. Sensor nach Anspruch 1, **dadurch gekennzeichnet, dass** mehrere Signalpfade (4, 4') zwischen mindestens einer sensitiven Baugruppe (2, 2', 2", 2A, 2B) und der Datenübertragungseinheit (3) enthalten sind und mehrere sensitive Baugruppen (2, 2', 2", 2A, 2B) enthalten sind.

3. Sensor nach einem der Ansprüche 1 bis 2, **dadurch gekennzeichnet, dass** als sensitive Baugruppe (2B) eine Anordnung zur Erfassung von Beschleunigungen enthalten ist.

4. Sensor nach einem der Ansprüche 1 bis 3, **dadurch gekennzeichnet, dass** als sensitive Baugruppe (2A) eine Anordnung zur Erfassung von Drücken enthalten ist.

5. Sensor nach einem der Ansprüche 1 bis 4, **dadurch gekennzeichnet, dass** Mittel (5, 6, 7) vorhanden sind, die es ermöglichen, als Übertragungsparameter eine Verstärkung und/oder eine Filterung und/oder eine digitale Signalverarbeitung einer Ausgangsgröße einer sensitiven Baugruppe (2, 2', 2", 2A, 2B) und/oder eine Wortbreite und/oder Übermittlungsintervalle festzulegen.

6. Sensor nach einem der Ansprüche 1 bis 5, **dadurch gekennzeichnet, dass** die Steuerlogik (8) über Mittel verfügt, die Festlegung mindestens eines Übertragungsparameters der Datenübertragungseinheit (3) in Abhängigkeit von einem aus der Ausgangsgröße mindestens einer sensitiven Baugruppe (2, 2', 2", 2A, 2B) abgeleiteten Schwellwert vorzunehmen.

7. Verfahren zur Bereitstellung eines Ausgangssignals eines Sensors, der mehrere sensitive Baugruppen zur quantitativen Erfassung eines zu bestimmenden Parameters, mindestens eine Datenübertragungseinheit für eine Übermittlung gewonnener Daten und mindestens einen Signalpfad zwischen den sensitiven Baugruppen und der Datenübertragungseinheit umfasst, **dadurch gekennzeichnet, dass** eine Ausgangsgröße der sensitiven Baugruppen einer Steuerlogik zugeführt wird, die Steuerlogik in Abhängigkeit von dieser Ausgangsgröße der sensitiven Baugruppen und/oder in Abhängigkeit von einer aus dieser Ausgangsgröße abgeleiteten Größe mindestens einen Übertragungsparameter der Datenübertragungseinheit festlegt, mindestens eine Ausgangsgröße der sensitiven Baugruppen über den Signalpfad an die Datenübertragungseinheit übermittelt, indem die Steuerlogik den Signalpfad und die Datenübertragungseinheit steuert, und mindestens ein Ausgangsdatenwort, das Informationen über die Ausgangsgröße der sensitiven Baugruppen enthält, an der Datenübertragungseinheit zur weiteren Übermittlung bereitgestellt wird, wobei in ein Ausgangsdatenwort, das an der Datenübertragungseinheit bereitgestellt wird, Informationen über von zwei unterschiedlichen sensitiven Baugruppen erfasste Parameter integriert werden und wobei die Auflösung, mit der Informationen über von zwei unterschiedlichen sensitiven Baugruppen erfasste Parameter in das Ausgangsdatenwort integriert werden, variiert wird.

8. Verfahren nach Anspruch 7, **dadurch gekennzeichnet, dass** die Festlegung mindestens eines Übertragungsparameters der Datenübertragungseinheit in Abhängigkeit von einem aus der Ausgangsgröße mindestens einer sensitiven Baugruppe abgeleiteten Schwellwert erfolgt.

9. Verfahren nach Anspruch 7 oder 8, **dadurch gekennzeichnet, dass** als Ausgangsgröße einer sensitiven Baugruppe die Ausgangsgröße einer Anordnung zur Erfassung von Beschleunigungen und als daraus abgeleitete Größe der Absolutwert einer Beschleunigung oder der Wert eines Integrals der Beschleunigung über ein Zeitfenster verwendet wird.

10. Verfahren nach einem der Ansprüche 7 bis 9, **dadurch gekennzeichnet, dass** als Ausgangsgröße einer sensitiven Baugruppe die Ausgangsgröße einer Anordnung zur Erfassung von Drücken oder eine daraus abgeleitete Größe verwendet wird.

11. Verfahren nach einem der Ansprüche 7 bis 10, **dadurch gekennzeichnet, dass** zur Festlegung mindestens eines Übertragungsparameters der Datenübertragungseinheit eine Verstärkung und/oder eine Filterung und/oder eine digitale Signalverarbeitung einer Ausgangsgröße mindestens einer sensitiven Baugruppe und/oder eine Wortbreite und/oder Übermittlungsintervalle festgelegt wird.

12. Verfahren nach Anspruch 7, **dadurch gekennzeichnet, dass** mindestens ein Druckwert und mindestens ein Beschleunigungswert in das an der Datenübertragungseinheit bereitgestellte Ausgangsdatenwort integriert werden.

## Claims

1. Sensor (1) for acquiring data, comprising a plurality of sensitive assemblies (2, 2', 2", 2A, 2B) for quantitatively capturing a parameter to be determined, at least one data transmission unit (3) for transmitting acquired data and at least one signal path (4) between the sensitive assemblies (2, 2', 2", 2A, 2B) and the data transmission unit (3), **characterized in that** a control logic unit (8) is also included and determines at least one transmission parameter of the data transmission unit (3) on the basis of at least one output variable of the sensitive assemblies (2, 2', 2", 2A, 2B), wherein the control logic unit (8) and/or the data transmission unit (3) has/have means for jointly providing data acquired from output variables of a plurality of sensitive assemblies (2, 2', 2", 2A, 2B) in an output data word, and wherein means are included and make it possible to set the word width which is available in an output data word for providing the data acquired from the output variables of the individual sensitive assemblies (2, 2', 2", 2A, 2B).

2. Sensor according to Claim 1, **characterized in that** a plurality of signal paths (4, 4') between at least one sensitive assembly (2, 2', 2", 2A, 2B) and the data transmission unit (3) are included and a plurality of sensitive assemblies (2, 2', 2'', 2A, 2B) are included.

3. Sensor according to one of Claims 1 to 2, **characterized in that** an arrangement for capturing accelerations is included as a sensitive assembly (2B).

4. Sensor according to one of Claims 1 to 3, **characterized in that** an arrangement for capturing pressures is included as a sensitive assembly (2A).

5. Sensor according to one of Claims 1 to 4, **characterized in that** there are means (5, 6, 7) which make it possible to determine amplification and/or filtering and/or digital signal processing of an output variable of a sensitive assembly (2, 2', 2", 2A, 2B) and/or a word width and/or transmission intervals as transmission parameters.

6. Sensor according to one of Claims 1 to 5, **characterized in that** the control logic unit (8) has means for determining at least one transmission parameter of the data transmission unit (3) on the basis of a threshold value derived from the output variable of at least one sensitive assembly (2, 2', 2", 2A, 2B).

7. Method for providing an output signal from a sensor which comprises a plurality of sensitive assemblies for quantitatively capturing a parameter to be determined, at least one data transmission unit for transmitting acquired data and at least one signal path between the sensitive assemblies and the data transmission unit, **characterized in that** an output variable of the sensitive assemblies is supplied to a control logic unit, the control logic unit determines at least one transmission parameter of the data transmission unit on the basis of this output variable of the sensitive assemblies and/or on the basis of a variable derived from this output variable, transmits at least one output variable of the sensitive assemblies to the data transmission unit via the signal path by virtue of the control logic unit controlling the signal path and the data transmission unit, and at least one output data word containing information relating to the output variable of the sensitive assemblies is provided at the data transmission unit for further transmission, wherein information relating to parameters captured by two different sensitive assemblies is integrated in an output data word provided at the data transmission unit, and wherein the resolution with which information relating to parameters captured by two different sensitive assemblies is integrated in the output data word is varied.

8. Method according to Claim 7, **characterized in that** at least one transmission parameter of the data transmission unit is determined on the basis of a threshold value derived from the output variable of at least one sensitive assembly.

9. Method according to Claim 7 or 8, **characterized in that** the output variable of an arrangement for capturing accelerations is used as the output variable of a sensitive assembly and the absolute value of an acceleration or the value of an integral of the acceleration over a time window is used as the variable derived therefrom.

10. Method according to one of Claims 7 to 9, **characterized in that** the output variable of an arrangement for capturing pressures or a variable derived therefrom is used as the output variable of a sensitive assembly.

11. Method according to one of Claims 7 to 10, **characterized in that** amplification and/or filtering and/or digital signal processing of an output variable of at least one sensitive assembly and/or a word width and/or transmission intervals is/are determined in order to determine at least one transmission parameter of the data transmission unit.

12. Method according to Claim 7, **characterized in that** at least one pressure value and at least one acceleration value are integrated in the output data word provided at the data transmission unit.

## Revendications

1. Capteur (1) pour l'acquisition de données, comprenant plusieurs sous-ensembles sensibles (2, 2', 2", 2A, 2B) destinés à la détection quantitative d'un paramètre à déterminer, au moins une unité de transmission de données (3) pour une communication des données acquises et au moins un trajet de signal (4) entre les sous-ensembles sensibles (2, 2', 2", 2A, 2B) et l'unité de transmission de données (3), **caractérisé en ce qu'**une logique de commande (8) est en outre incluse, laquelle définit au moins un paramètre de transmission de l'unité de transmission de données (3) en fonction d'au moins une grandeur de sortie des sous-ensembles sensibles (2, 2', 2", 2A, 2B), la logique de commande (8) et/ou l'unité de transmission de données (3) disposant de moyens pour délivrer les données acquises à partir des grandeurs de sortie de plusieurs sous-ensembles sensibles (2, 2', 2", 2A, 2B) en commun dans un mot de données de sortie, et des moyens étant inclus, lesquels permettent de régler la largeur de mot qui est disponible dans un mot de données de sortie pour la délivrance des données acquises à partir des grandeurs de sortie des sous-ensembles sensibles (2, 2', 2", 2A, 2B) individuels.

2. Capteur selon la revendication 1, **caractérisé en ce que** plusieurs trajets de signal (4, 4') sont inclus entre au moins un sous-ensemble sensible (2, 2', 2", 2A, 2B) et l'unité de transmission de données (3) et plusieurs sous-ensembles sensibles (2, 2', 2", 2A, 2B) sont inclus.

3. Capteur selon l'une des revendications 1 à 2, **caractérisé en ce que** le sous-ensemble sensible (2B) inclus est un arrangement destiné à détecter des accélérations.

4. Capteur selon l'une des revendications 1 à 3, **caractérisé en ce que** le sous-ensemble sensible (2A) inclus est un arrangement destiné à détecter des pressions.

5. Capteur selon l'une des revendications 1 à 4, **caractérisé en ce que** des moyens (5, 6, 7) sont présents, lesquels permettent de définir comme paramètre de transmission une amplification et/ou un filtrage et/ou un traitement de signal numérique d'une grandeur de sortie d'un sous-ensemble sensible (2, 2', 2", 2A, 2B) et/ou une largeur de mot et/ou un intervalle de transmission.

6. Capteur selon l'une des revendications 1 à 5, **caractérisé en ce que** la logique de commande (8) dispose de moyens pour effectuer la définition d'au moins un paramètre de transmission de l'unité de transmission de données (3) en fonction d'une valeur de seuil dérivée de la grandeur de sortie d'un sous-ensemble sensible (2, 2', 2", 2A, 2B).

7. Procédé de délivrance d'un signal de sortie d'un capteur, lequel comporte plusieurs sous-ensembles sensibles destinés à la détection quantitative d'un paramètre à déterminer, au moins une unité de transmission de données pour une communication des données acquises et au moins un trajet de signal entre les sous-ensembles sensibles et l'unité de transmission de données, **caractérisé en ce qu'**une grandeur de sortie des sous-ensembles sensibles est acheminée à une logique de commande, la logique de commande définit au moins un paramètre de transmission de l'unité de transmission de données en fonction de cette grandeur de sortie des sous-ensembles sensibles et/ou en fonction d'une grandeur dérivée de celle-ci, au moins une grandeur de sortie des sous-ensembles sensibles est communiquée à l'unité de transmission de données par le biais du trajet de signal **en ce que** la logique de commande commande le trajet de signal et l'unité de transmission de données, et au moins un mot de données de sortie, qui contient des informations à propos de la grandeur de sortie des sous-ensembles sensibles, est délivré à l'unité de transmission de données pour communication ultérieure, des informations à propos des paramètres détectés par deux sous-ensembles sensibles différents étant intégrées dans un mot de données de sortie qui est délivré à l'unité de transmission de données et la résolution avec laquelle les informations à propos des paramètres détectés par deux sous-ensembles sensibles différents sont intégrées dans le mode de données de sortie variant.

8. Procédé selon la revendication 7, **caractérisé en ce que** la définition d'au moins un paramètre de transmission de l'unité de transmission de données s'effectue en fonction d'une valeur de seuil dérivée de la grandeur de sortie d'au moins un sous-ensemble sensible.

9. Procédé selon la revendication 7 ou 8, **caractérisé en ce que** la grandeur de sortie d'un sous-ensemble sensible utilisée est la grandeur de sortie d'un arrangement destiné à détecter les accélérations et la grandeur qui en est dérivée utilisée est la valeur absolue d'une accélération ou la valeur d'une intégrale de l'accélération sur une période de temps.

10. Procédé selon l'une des revendications 7 à 9, **caractérisé en ce que** la grandeur de sortie d'un sous-ensemble sensible utilisée est la grandeur de sortie d'un arrangement destiné à détecter les pressions ou une grandeur qui en est dérivée.

11. Procédé selon l'une des revendications 7 à 10, **caractérisé en ce qu'**une amplification et/ou un filtrage et/ou un traitement de signal numérique d'une grandeur de sortie d'au moins un sous-ensemble sensible et/ou une largeur de mot et/ou un intervalle de transmission sont définis pour la définition d'au moins un paramètre de transmission de l'unité de transmission de données.

12. Procédé selon la revendication 7, **caractérisé en ce qu'**au moins une valeur de pression et au moins une valeur d'accélération sont intégrées au mot de données de sortie délivré à l'unité de transmission de données.
